# EUROPEAN PATENT APPLICATION

(11) **EP 4 694 322 A1**
(43) Date of publication of application: **11.02.2026**
(21) Application number: 24803093.4
(22) Date of filing: 10.05.2024
(51) Int. Cl.: H04W 28/26, H04W 28/084, H04L 41/40

(54) **EDGE APPLICATION METHOD AND APPARATUS**

(30) Priority: 11.05.2023 CN 202310532533
(71) Applicant: Huawei Technologies Co., Ltd., Shenzhen, Guangdong 518129 (CN)
(72) Inventor: LI, Shitao, Shenzhen, Guangdong 518129 (CN)
(74) Representative: Isarpatent
(86) International application number: PCT/CN2024/092368
(87) International publication number: WO 2024/230815

(57) **Abstract**

This application relates to the field of wireless communication technologies, and provides an edge application method and an apparatus. The method includes: An ECSP management system receives requirement information of a reserved resource from an ASP, and requests, based on the requirement information of the reserved resource, a MANO to reserve the resource in an EDN at a corresponding location. Then, the ASP may deploy an EAS or the like in the reserved resource. A resource for deploying the EAS is reserved in the EDN in advance, so that a probability that the EAS fails to be deployed due to reasons such as insufficient remaining resources in the EDN can be reduced.

## Description

### CROSS-REFERENCE TO RELATED APPLICATIONS

This application claims priority to Chinese Patent Application No. 202310532533.3, filed with the China National Intellectual Property Administration on May 11, 2023 and entitled "EDGE APPLICATION METHOD AND APPARATUS", which is incorporated herein by reference in its entirety.

### TECHNICAL FIELD

Embodiments of this application relate to the field of communication technologies, and in particular, to an edge application method and an apparatus.

### BACKGROUND

A basic concept of edge computing is to run a computing task on a computing resource close to a data source, to effectively reduce latency of a computing system, reduce data transmission bandwidth, relieve pressure of a cloud computing center, improve availability, and ensure data security and privacy. When an edge application server (edge application server, EAS) is deployed in an edge data network (edge data network, EDN), a "first come, first served" mechanism is used. If remaining resources in the EDN cannot meet a deployment requirement of the EAS, problems such as an EAS deployment failure may be caused.

### SUMMARY

Embodiments of this application provide an edge application method and an apparatus. A resource for deploying an EAS is reserved in an EDN in advance, so that a probability that the EAS fails to be deployed due to reasons such as insufficient remaining resources in the EDN is reduced.

According to a first aspect, an edge application method is provided. The method is applied to an edge computing service provider ECSP management system, and the method may be performed by the ECSP management system, or a chip, a circuit, or the like used in the ECSP management system. For example, the method is performed by the ECSP management system, and includes: The ECSP management system receives requirement information of a reserved resource from an application service provider ASP, where the requirement information of the reserved resource includes location information of the reserved resource. The ECSP management system sends a first request to a management and orchestration MANO based on the requirement information of the reserved resource, where the first request is used to request the MANO to reserve the resource in an EDN corresponding to the location information, there is a network connection between the reserved resource and a user plane function network element UPF corresponding to the location information, and the reserved resource is used to deploy an edge application server EAS of the ASP.

According to the foregoing design, the ASP may request to reserve a part of resources before deploying an EAS application. For example, the ASP sends the requirement information of the reserved resource to the ECSP management system, the ECSP management system sends the first request to the MANO based on the requirement information of the reserved resource, and the MANO reserves, based on the first request, the resource in the EDN corresponding to the location information required for the reserved resource. Then, after the resource is successfully reserved, the ASP may send a request for deploying the EAS in the reserved resource to the ECSP management system. In this way, provided that within a quota of the reserved resource, the ECSP management system can meet a requirement of the ASP for deploying the EAS application, to resolve a problem during EAS deployment that there may be a high EAS deployment failure rate due to a "first come, first served" mechanism.

In a design, the requirement information of the reserved resource further includes at least one of the following: a quantity of reserved resources, a performance parameter of the reserved resource, or expiration time of the reserved resource.

According to the foregoing design, the requirement information of the reserved resource may include the quantity of reserved resources, the performance parameter of the reserved resource, and the like. For example, the performance parameter of the reserved resource includes at least one of a central processing unit (central processing unit, CPU) parameter of the reserved resource, a storage capability of the reserved resource, network bandwidth of the reserved resource, or the like. A resource that meets the quantity and the performance parameter may be selected from the EDN at a corresponding location based on at least one of the quantity of reserved resources, the performance parameter of the reserved resource, or the like, as the reserved resource. Further, the requirement information of the reserved resource further includes the expiration time of the reserved resource. The expiration time of the reserved resource may also be referred to as effective time of the reserved resource. When the expiration time is reached or the effective time expires, the reserved resource becomes invalid, and is no longer reserved for the ASP to deploy the EAS. In this way, a case in which the ASP does not use a reserved resource but occupies the reserved resource for a long time is avoided, and utilization of the reserved resource is improved.

In a design, the method further includes: when the reserved resource is successfully reserved, determining usage status information of the reserved resource, where the usage status information of the reserved resource includes at least one of the following: an identifier of the reserved resource, a usage status of the reserved resource, an identifier of the EAS deployed in the reserved resource, or usage of the reserved resource.

According to the foregoing design, at least one of the following information may be determined based on the usage status information of the reserved resource: which reserved resource being occupied, which reserved resource being idle, usage of the occupied reserved resource, an EAS deployed in the occupied reserved resource, or other information. Then, EAS deployment can be facilitated. For example, the EAS is preferentially deployed in an idle reserved resource, or the ESA is preferentially deployed in a reserved resource with low usage. Alternatively, when a reserved resource is to be deleted, a reserved resource that can be deleted may be determined based on usage information of the reserved resource, to avoid deleting the reserved resource for deploying the EAS. When the reserved resource that can be deleted is deleted, the reserved resource that is for deploying the EAS and that provides a service for the deployed EAS is not affected.

In a design, the identifier of the reserved resource includes an identifier of a virtualized network function VNF and an identifier of a network service NS to which the VNF belongs; and the usage status of the reserved resource includes: the VNF is in an idle state or an occupied state.

In a design, after the sending a first request to a MANO based on the requirement information of the reserved resource, the method further includes:
sending a second request to an operator management system, where the second request is used to request the operator management system to establish the network connection between the UPF and the reserved resource, and the second request includes connection information of the reserved resource.

According to the foregoing design, when the resource is reserved, a connection network between the reserved resource and the UPF is established in advance. In this way, when the EAS is deployed in the reserved resource, the network between the EAS and the UPF is in a connected state, so that the EAS can provide a service for a user at any time, and latency from time when the EAS is deployed to time when the EAS provides the service for the user is low.

In a design, after the sending a second request to an operator management system, the method further includes: receiving a second response from the operator management system, where the second response includes connection information of the UPF; and sending a third request to the MANO, where the third request is used to request the MANO to update information about the connection between the reserved resource and the UPF, and the third request includes the connection information of the UPF.

In a design, before the sending a first request to a MANO based on the requirement information of the reserved resource, the method further includes:
sending a fourth request to an operator management system, where the fourth request is used to request connection information of the UPF corresponding to the location information; and receiving a fourth response from the operator management system, where the fourth response includes the connection information of the UPF corresponding to the location information.

In a design, the method further includes: receiving a fifth request from the ASP, where the fifth request is used to request to deploy the EAS in the reserved resource, and the fifth request includes the identifier of the reserved resource.

According to the foregoing design, after the resource is successfully reserved, the ASP may deploy the EAS in the reserved resource, to resolve a problem during EAS deployment that latency in accessing the EAS by the user is high because the EAS is deployed in an EDN far away from the user due to the "first come, first served" mechanism and a limited resource for an EAS at a corresponding location.

In a design, the fifth request further includes movement policy information of the EAS, and the movement policy information includes at least one of the following: a movement condition or a movement scope.

According to the foregoing design, when the ASP requests to deploy the EAS, the fifth request for requesting to deploy the EAS further includes the movement policy of the EAS. When the EAS needs to be moved, for example, some servers running the EAS need to be shut down due to maintenance or upgrade of the EDN, the EAS needs to be moved to another server. Alternatively, because resources in the EDN are insufficient, the EAS may need to be moved to another server. The EAS may be moved based on the movement policy information of the EAS, to ensure that a service provided by the EAS is not affected, is slightly affected, or the like.

In a design, the movement condition includes: movement allowed, movement not allowed, or whether the ASP needs to be queried before movement; and the movement scope includes: moving the EAS in a same reserved resource, moving the EAS in different reserved resources in a same EDN, or moving the EAS in different EDNs.

According to a second aspect, an edge application method is provided. The second aspect is for an ASP side corresponding to the first aspect. For beneficial effects, refer to the descriptions of the first aspect. The method is applied to the application service provider ASP. The method is performed by the ASP, or a chip, a circuit, or the like used in the ASP. The method includes: determining requirement information of a reserved resource, where the requirement information of the reserved resource includes at least location information of the reserved resource; and sending the requirement information of the reserved resource to an edge computing service provider ECSP management system, where there is a network connection between the reserved resource and a UPF corresponding to the location information, and the reserved resource is used to deploy an edge application server EAS of the ASP.

**In** a design, the requirement information of the reserved resource further includes at least one of the following: a quantity of reserved resources, a performance parameter of the reserved resource, or expiration time of the reserved resource.

**In** a design, the method further includes: sending a fifth request to the ECSP management system, where the fifth request is used to request to deploy the EAS in the reserved resource, and the fifth request includes an identifier of the reserved resource.

**In** a design, the fifth request further includes movement policy information of the EAS, and the movement policy information includes at least one of the following: a movement condition or a movement scope.

**In** a design, the movement condition includes: movement allowed, movement not allowed, or whether the ASP needs to be queried before movement; and the movement scope includes: moving the EAS in a same reserved resource, moving the EAS in different reserved resources in a same EDN, or moving the EAS in different EDNs.

According to a third aspect, an edge application method is provided. The third aspect is for a system corresponding to the first aspect. For beneficial effects, refer to the descriptions of the first aspect. The method includes: An edge computing service provider ECSP management system receives requirement information of a reserved resource from an application service provider ASP, and sends a first request to a management and orchestration MANO based on the requirement information of the reserved resource, where the requirement information of the reserved resource includes location information of the reserved resource, the first request is used to request the MANO to reserve the resource in an edge data network EDN corresponding to the location information, there is a network connection between the reserved resource and a user plane function UPF corresponding to the location information, and the reserved resource is used to deploy an edge application server EAS of the ASP. The MANO receives the first request from the ECSP management system.

In a design, the method further includes: The MANO reserves, based on the first request, the resource in the EDN corresponding to the location information.

In a design, the method further includes: The ASP sends the requirement information of the reserved resource to the ECSP management system.

In a design, the requirement information of the reserved resource further includes at least one of the following: a quantity of reserved resources, a performance parameter of the reserved resource, or expiration time of the reserved resource.

In a design, the method further includes: When the reserved resource is successfully reserved, the ECSP management system determines usage status information of the reserved resource, where the usage status information of the reserved resource includes at least one of the following: an identifier of the reserved resource, a usage status of the reserved resource, an identifier of the EAS deployed in the reserved resource, or usage of the reserved resource.

In a design, the identifier of the reserved resource includes an identifier of a virtualized network function VNF and an identifier of a network service NS to which the VNF belongs; and the usage status of the reserved resource includes: the VNF is in an idle state or an occupied state.

In a design, after that an ECSP management system sends a first request to a MANO based on the requirement information of the reserved resource, the method further includes: The ECSP management system sends a second request to an operator management system, where the second request is used to request the operator management system to establish the network connection between the UPF and the reserved resource, and the second request includes connection information of the reserved resource. The operator management system establishes the network connection between the UPF and the reserved resource based on the second request.

In a design, the method further includes: The operator management system sends a second response to the ECSP management system, where the second response includes connection information of the UPF. The ECSP management system sends a third request to the MANO, where the third request is used to request the MANO to update information about the connection between the reserved resource and the UPF. The MANO updates the information about the connection between the reserved resource and the UPF based on the connection information that is of the UPF and that is included in the third request.

In a design, before that an ECSP management system sends a first request to a MANO based on the requirement information of the reserved resource, the method further includes: The ECSP management system sends a fourth request to an operator management system, where the fourth request is used to request connection information of the UPF corresponding to the location information. The operator management system sends a fourth response to the ECSP management system, where the fourth response includes the connection information of the UPF corresponding to the location information.

In a design, the method further includes: The ECSP management system receives a fifth request from the ASP, where the fifth request is used to request to deploy the EAS in the reserved resource, and the fifth request includes the identifier of the reserved resource.

In a design, the method further includes: The ASP sends the fifth request to the ECSP management system.

In a design, the fifth request further includes movement policy information of the EAS, and the movement policy information includes at least one of the following: a movement condition or a movement scope.

In a design, the movement condition includes: movement allowed, movement not allowed, or whether the ASP needs to be queried before movement; and the movement scope includes: moving the EAS in a same reserved resource, moving the EAS in different reserved resources in a same EDN, or moving the EAS in different EDNs.

According to a fourth aspect, a communication apparatus is provided. The communication apparatus can implement the method in any one of the first aspect to the third aspect. For example, the communication apparatus includes means (means) corresponding to any one of the first aspect to the third aspect. The communication apparatus may be implemented by hardware, implemented by software, or implemented by hardware executing corresponding software.

In a design, the communication apparatus includes a unit for performing any one of the first aspect to the third aspect.

In a design, the communication apparatus includes a processor and a memory. The processor is configured to execute a computer program or instructions stored in the memory, to enable the communication apparatus to implement the method in any one of the first aspect to the third aspect.

In a design, the communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect to the third aspect by using a logic circuit or by executing code instructions.

According to a fifth aspect, a computer-readable storage medium is provided, and stores a computer program or instructions. When the computer program or the instructions are run on a computer, the computer is enabled to implement the method in any one of the first aspect to the third aspect.

According to a sixth aspect, a computer program product is provided, and includes a computer program or instructions. When the computer program or the instructions are run by a computer, the method in any one of the first aspect to the third aspect is performed.

According to a seventh aspect, a chip is provided, and includes a processor. The processor is coupled to a memory, and is configured to execute a computer program or instructions stored in the memory, to enable the chip to implement the method in any one of the first aspect to the third aspect.

According to an eighth aspect, a communication system is provided. The communication system includes a first communication apparatus and a MANO, where the first communication apparatus is configured to implement the method according to the first aspect. Optionally, the system further includes an operator management system. Further, the system further includes a second communication apparatus, where the second communication apparatus is configured to implement the method according to the second aspect.

### BRIEF DESCRIPTION OF DRAWINGS

FIG. 1 is a diagram of a communication system according to an embodiment of this application;
FIG. 2 is a diagram of deploying an EAS in an EDN according to an embodiment of this application;
FIG. 3 is a flowchart of reserving a resource according to an embodiment of this application;
FIG. 4 is another flowchart of reserving a resource according to an embodiment of this application;
FIG. 5 is still another flowchart of reserving a resource according to an embodiment of this application;
FIG. 6 is a flowchart of deploying an EAS in a reserved resource according to an embodiment of this application;
FIG. 7 is a flowchart of deploying an EAS in a reserved resource and moving the EAS according to an embodiment of this application;
FIG. 8 is a flowchart of deleting a reserved resource according to an embodiment of this application;
FIG. 9 is a diagram of a structure of an apparatus according to an embodiment of this application; and
FIG. 10 is a diagram of another structure of an apparatus according to an embodiment of this application.

### DESCRIPTION OF EMBODIMENTS

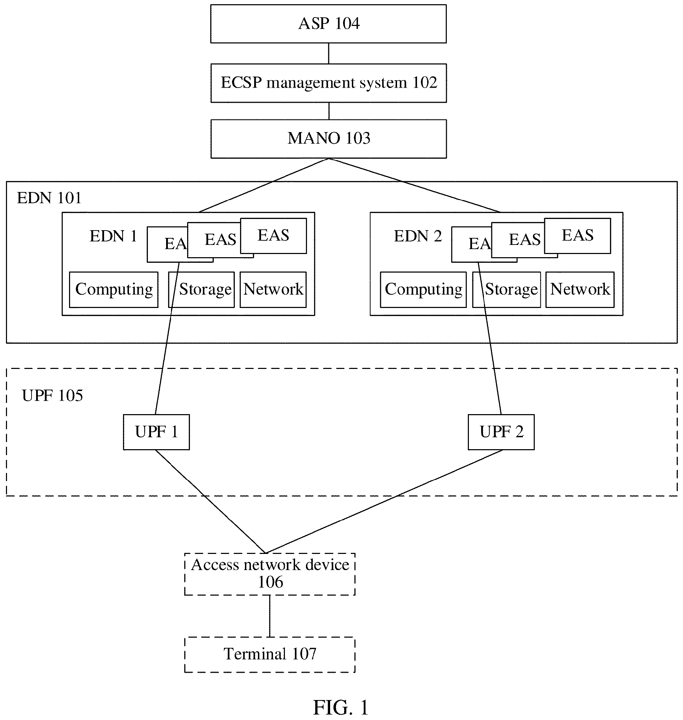

FIG. 1 shows a communication system according to an embodiment of this application. As shown in FIG. 1, the communication system includes the following.

Edge data network (edge data network, EDN) 101: The EDN 101 is a small local data center at the edge. The EDN 101 includes computing, storage, network, and other resources, which can be provided for an application service provider (application service provider, ASP) to deploy an edge application server (edge application server, EAS). That is, the ASP can deploy the EAS in the EDN. For ease of description, in FIG. 1, two EDNs are used as an example for description, and this does not constitute a limitation on this embodiment of this application. For example, the communication system shown in FIG. 1 may alternatively include another quantity of EDNs and the like.

Edge computing service provider (edge computing service provider, ECSP) management system 102: The ECSP 102 is responsible for managing the edge data network, for example, creating or deleting an EAS, and monitoring performance of the EAS. For example, the ASP may apply to the ECSP management system for deploying the EAS, and the ECSP management system may select, based on a deployment requirement, for example, a resource size and a resource location, an EDN that meets a condition to deploy the EAS.

In embodiments of this application, an apparatus configured to implement a function of the ECSP management system may be the ECSP management system, or may be an apparatus, for example, a chip system, a hardware circuit, a software module, or a combination of a hardware circuit and a software module, that can support the ECSP management system in implementing the function. The apparatus may be installed in the ECSP management system or may be used together with the ECSP management system. The chip system may include a chip, or may include a chip or another discrete component. For ease of description, the following describes the technical solutions provided in embodiments of this application by using an example in which an apparatus for implementing the function of the ECSP management system is the ECSP management system.

Management and orchestration (management and orchestration, MANO) 103: The MANO 103 is responsible for managing a virtualized network function (virtualized network function, VNF), for example, deploying the EAS in the EDN in a manner of the VNF based on a cloud computing technology. Network functions virtualization (network functions virtualization, NFV) is using a general-purpose hardware device and a virtualization technology to carry a function of a dedicated device in a conventional network, to reduce high costs of deploying the dedicated device. Software and hardware are decoupled, so that a network function no longer depends on dedicated hardware. In addition, resources may be fully and flexibly shared by using a characteristic of cloud computing, to implement rapid development and deployment of a new service, and perform automatic deployment, elastic scaling, fault isolation, self-healing, and the like based on an actual service requirement.

In embodiments of this application, an apparatus configured to implement a function of the MANO may be the MANO, or may be an apparatus, for example, a chip system, a hardware circuit, a software module, or a combination of a hardware circuit and a software module, that can support the MANO in implementing the function. The apparatus may be installed in the MANO or may be used together with the MANO. The chip system may include a chip, or may include a chip or another discrete component. For ease of description, the following describes the technical solutions provided in embodiments of this application by using an example in which an apparatus for implementing the function of the MANO is the MANO.

ASP 104: The ASP 104 is an application service provider, and the application service provider applies for deploying the EAS in the EDN by using the ECSP management system and the MANO. For example, the application service provider may determine the EAS, and send a request for deploying the EAS to the ECSP management system, and the MANO deploys the EAS in the corresponding EDN.

In embodiments of this application, an apparatus configured to implement a function of the ASP may be the ASP, or may be an apparatus, for example, a chip system, a hardware circuit, a software module, or a combination of a hardware circuit and a software module, that can support the ASP in implementing the function. The apparatus may be installed in the ASP or may be used together with the ASP. The chip system may include a chip, or may include a chip or another discrete component. For ease of description, the following describes the technical solutions provided in embodiments of this application by using an example in which an apparatus for implementing the function of the ASP is the ASP.

In embodiments of this application, after the EAS is deployed, when a user is near the EDN, for example, near an EDN 1, the user may access, in a proximity access manner, an EAS application that has been deployed in the EDN 1, for example, a game server or a geographical location application server. For example, the user uses a terminal 107 to connect, through an access network device 106, to a user plane function network element (user plane function, UPF) that meets a condition, for example, a nearest user plane function network element 105, and accesses, through the UPF 105, an EAS that is to be accessed.

Optionally, a network architecture shown in FIG. 1 may further include the UPF 105, the access network device 106, the terminal 107, and the like. The UPF 105 is a network element responsible for a data plane function in a core network. For example, the UPF is mainly responsible for forwarding and receiving user data. For example, in downlink transmission, the UPF may receive user data from a data network (data network, DN), and transmit the user data to the terminal through the access network device. In uplink transmission, the UPF network element may receive user data from the terminal through the access network device, and forward the user data to the DN. It may be understood that, in addition to the UPF 105, the network architecture shown in FIG. 1 may further include another device in the core network, for example, at least one of an access and mobility management function (access and mobility management function, AMF), a session management function (session management function, SMF), a policy control function (policy control function, PCF), an application function (application function, AF), a unified data management (unified data management, UDM), an authentication server function (authentication server function, AUSF), or a network slice selection function (network slice selection function, NSSF).

It should be noted that in descriptions of this application, "at least one" means one or more, and "a plurality of" means two or more. "At least one of the following: A, B, or C" or "at least one of A, B, or C" may indicate: including A; including B; including C; including A and B; including A and C; including B and C; including A, B, and C, and the like.

The access network device 106 may be a base station (base station), an evolved NodeB (evolved NodeB, eNodeB), a transmission reception point (transmission reception point, TRP), a next generation base station (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit, for example, may be a central unit (central unit, CU), a distributed unit (distributed unit, DU), a radio unit (radio unit, RU), a central unit control plane (CU control plane, CU-CP) module, or a central unit user plane (CU user plane, CU-UP) module, that completes a part of functions of a base station. The access network device may be a macro base station, may be a micro base station or an indoor base station, or may be a relay node, a donor node, or the like. A specific technology and a specific device form that are used by the access network device are not limited in this application.

The terminal 107 may be referred to as a terminal device, user equipment (user equipment, UE), a mobile station, a mobile terminal, or the like. The terminal may be widely used in communication in various scenarios, for example, including but not limited to one or more of the following scenarios: device-to-device (device-to-device, D2D), vehicle-to-everything (vehicle-to-everything, V2X), machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, or a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

The access network device and the terminal may be located in fixed locations, or may be movable. The access network device and/or the terminal may be deployed on land, including an indoor device, an outdoor device, a handheld device, or a vehicle-mounted device; may be deployed on water; or may be deployed on an airplane, a balloon, and an artificial satellite in the air. An application scenario of the access network device and the terminal is not limited in embodiments of this application. The access network device and the terminal may be deployed in a same scenario or different scenarios. For example, the access network device and the terminal are both deployed on land; or the access network device is deployed on the land, and the terminal is deployed on water. Examples are not provided one by one.

Further, the communication system shown in FIG. 1 may further include an operator management system, which is not shown in FIG. 1. For example, the operator management system includes one or more network elements, and the one or more network elements interact with the ECSP management system in embodiments of this application, to implement operations such as establishing or deleting a connection between a reserved resource and a UPF. For example, the operator management system includes a management system (management system, MS) in a public land mobile network (public land mobile network, PLMN), and the MS in the PLMN interacts with the ECSP management system, to implement operations such as establishing or deleting a connection between a reserved resource and a UPF.

In embodiments of this application, an apparatus configured to implement a function of the operator management system may be one or more network elements in the operator management system, or may be an apparatus, for example, a chip system, a hardware circuit, a software module, or a combination of a hardware circuit and a software module, that can support the operator management system in implementing the function. The apparatus may be installed in the one or more network elements in the operator management system, or may be used together with the operator management system. The chip system may include a chip, or may include a chip or another discrete component. For ease of description, the following describes the technical solutions provided in embodiments of this application by using an example in which an apparatus for implementing the function of the operator management system is the operator management system.

The communication system shown in FIG. 1 may support various radio access technologies (radio access technologies, RATs). For example, the communication system shown in FIG. 1 may be a 5G communication system (which may also be referred to as a new radio (new radio, NR) communication system), a Wi-Fi system, or a future-oriented evolved system. The communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as the communication system evolves and a new service scenario emerges.

The EDN is a small data center deployed at the edge and near a user area by the ECSP management system, and generally has limited resources. The ECSP management system may need to serve a plurality of ASPs, for example, an internet application vendor and a game application vendor. According to a current EAS deployment procedure, the ECSP management system and the MANO select, based on a requirement of the ASP, an EDN that meets a condition, to deploy the EAS, for example, select an EDN corresponding to a location based on a requirement of the ASP for the deployment location. Usually, one ECSP management system manages only one EDN in an area. If the EDN has sufficient remaining resources that meet a requirement for a resource for EAS deployment, the EAS can be deployed. However, if the EDN is busy and does not have sufficient remaining resources to meet the requirement for deploying the EAS, the EAS may fail to be deployed, or the ECSP management system and the MANO select another EDN that is further away from the user to deploy the EAS.

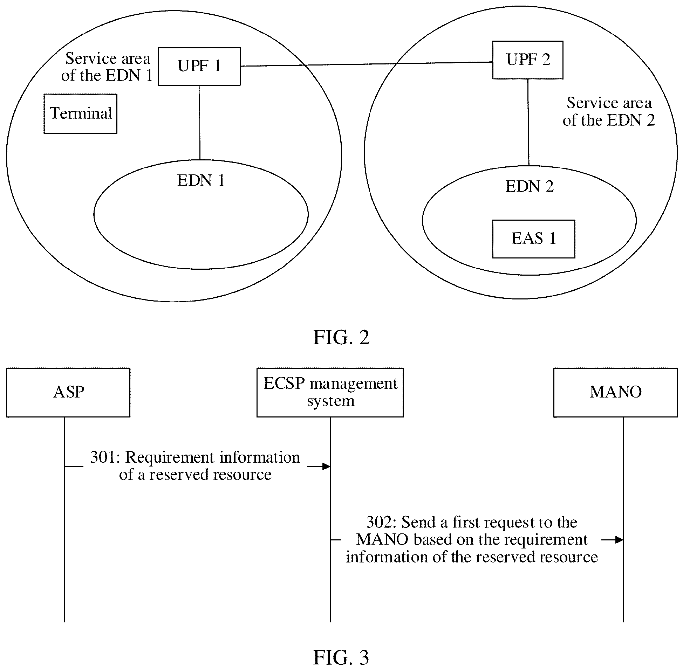

For example, as shown in FIG. 2, an application of an EAS 1 is mainly for a user near the EDN 1. Because remaining resources of the EDN 1 cannot meet a requirement for deploying the EAS 1, the ECSP management system and the MANO deploy the EAS 1 in an EDN 2. Each EDN has a service area. When a user in the service area of the EDN accesses an application in the EDN through a terminal, an access network device, and a UPF, the EDN can provide an optimal service, and the user can enjoy optimal service experience, for example, low latency and high bandwidth. If the EDN 1 does not have sufficient resources, the edge application EAS 1 can be deployed only in the EDN 2. In this case, a user in a service area of the EDN 1 cannot access the EAS 1 through nearby access. For example, the user can access a UPF 2 in a service area of the EDN 2 only through a UPF 1, and then access the EAS 1 in the EDN 2 through the UPF 2. This brings poor service experience, for example, high latency, to the user in the service area of the EDN 1. In EAS deployment, a "first come, first served" mechanism is used, so that an ASP, even a more important ASP, that sends a request first has a greater chance to perform deployment in a desired area.

In view of this, this application provides an edge application method and an apparatus. The method includes: Before deploying an EAS application, an ASP may request to reserve a part of resources. After the resource is successfully reserved, the ASP may send a request for deploying an EAS in the reserved resource to an ECSP management system. In this way, provided that within a quota of the reserved resource, the ECSP management system can meet a requirement of the ASP for deploying the EAS application, to resolve a problem during EAS deployment that there may be an EAS deployment failure due to a "first come, first served" mechanism, or latency in accessing the EAS by a user is high because the EAS is deployed in an EDN far away from the user.

It may be understood that in embodiments of this application, the ASP, the ECSP management system, the MANO, the operator management system, and the like cooperate with each other to implement the solutions in embodiments of this application. A function implemented by the ASP may be specifically implemented by the ASP, or may be implemented by a chip, a circuit, or the like used in the ASP. In the following descriptions, the ASP is used as an example for implementation. Similarly, a function of the ECSP management system, the MANO, the operator management system, or the like may be implemented by the ECSP management system, the MANO, or the operator management system, or may be implemented by a chip used in the ECSP management system, the MANO, or the operator management system. In the following descriptions, an example in which the ECSP management system, the MANO, or the operator management system implements the corresponding function is used.

### [Embodiment 1]

FIG. 3 provides a procedure. The procedure may be used to reserve a resource, and includes:
Step 301: An ECSP management system receives requirement information of a reserved resource from an ASP.

The requirement information of the reserved resource includes location information of the reserved resource. For example, the location information is latitude and longitude information of the reserved resource, or geographical location information of the reserved resource. Further, the requirement information of the reserved resource further includes at least one of a quantity of reserved resources, a performance parameter of the reserved resource, expiration time of the reserved resource, or the like. The performance parameter of the reserved resource includes at least one of a central processing unit (central processing unit, CPU) parameter of the reserved resource, a storage capability of the reserved resource, network bandwidth of the reserved resource, or the like. The expiration time of the reserved resource may also be referred to as effective time of the reserved resource. When the expiration time is reached or the effective time expires, the reserved resource becomes invalid, and is no longer reserved for the ASP to deploy an EAS.

For example, the reserved resource is a virtual machine (virtual machine, VM), and the requirement information of the reserved resource includes at least one of the following:
A quantity of virtual machines: for example, may be 10.

A performance parameter of the virtual machine: a CPU, for example, may be 1800 megahertz (MHz); a storage capability, for example, may be 2024 megabytes (MB); and network bandwidth, for example, may be 100 M.

Expiration time: for example, may be 20230501. This means that the reserved resource is valid before May 1, 2023. To be specific, after May 1, 2023, the reserved resource becomes invalid, and the reserved resource is no longer reserved for the ASP to deploy the EAS. The reserved resource may be used for another purpose. For example, the reserved resource can be allocated to another ASP to deploy an EAS. The expiration time may also be referred to as reservation expiration (reservation expiration).

Location information: for example, may be a district in Nanjing. This means that the resource can be reserved in an EDN in a district in Nanjing. The location information may also be referred to as a location requirement (location requirement).

According to the foregoing design, the requirement information of the reserved resource may include the quantity of reserved resources, the performance parameter of the reserved resource, and the like. For example, the performance parameter of the reserved resource includes at least one of the central processing unit (central processing unit, CPU) parameter of the reserved resource, the storage capability of the reserved resource, the network bandwidth of the reserved resource, or the like. A resource that meets the quantity and the performance parameter may be selected from an EDN at a corresponding location based on at least one of the quantity of reserved resources, the performance parameter of the reserved resource, or the like, as the reserved resource. Further, the requirement information of the reserved resource further includes the expiration time of the reserved resource. The expiration time of the reserved resource may also be referred to as the effective time of the reserved resource. When the expiration time is reached or the effective time expires, the reserved resource becomes invalid, and is no longer reserved for the ASP to deploy the EAS. In this way, a case in which the ASP does not use a reserved resource but occupies the reserved resource for a long time is avoided, and utilization of the reserved resource is improved.

In a design, the requirement information of the reserved resource may be carried in an object, and the object includes the requirement information of the reserved resource. For example, the object may be referred to as a reservation job (reservation job) object. For example, an implementation of step 301 includes: The ECSP management system receives a reservation job object from the ASP, where the reservation job object includes the requirement information of the reserved resource. Further, an implementation of step 301 includes: The ECSP management system receives a request for creating a reservation job object instance from the ASP, where the request includes a reservation job object, and the reservation job object includes the requirement information of the reserved resource, and the like.

Step 302: The ECSP management system sends a first request to a MANO based on the requirement information of the reserved resource, where the first request is used to request the MANO to reserve the resource in an EDN corresponding to the location information, there is a network connection between the reserved resource and a UPF corresponding to the location information, and the reserved resource is used to deploy the EAS of the ASP.

In an implementation, the MANO includes a network functions virtualization orchestrator (NFV MANO, NFVO), which may communicate with a virtualized infrastructure manager (virtualized infrastructure manager, VIM) in the MANO, to perform at least one of resource allocation or resource reservation. In step 302, the ECSP management system may specifically send the first request to the NFVO. The NFVO may reserve, based on the first request, the resource in the EDN corresponding to the location information.

In the following descriptions, specific implementation of step 302 is described in the following two cases.

Case 1: An operator management system is responsible for the network connection between the reserved resource and the UPF.

After sending the first request to the MANO, the ECSP management system may receive a first response from the MANO, where the first response includes connection information of the reserved resource. The ECSP management system may request the operator management system to establish the network connection between the reserved resource and the UPF. For example, the ECSP management system sends a second request to the operator management system, where the second request is used to request the operator management system to establish the network connection between the UPF and the reserved resource, and the second request includes the connection information of the reserved resource. The operator management system establishes the network connection between the UPF and the reserved resource based on the second request.

According to the foregoing design, when the resource is reserved, a connection network between the reserved resource and the UPF is established in advance. In this way, when the EAS is deployed in the reserved resource, the network between the EAS and the UPF is in a connected state, so that the EAS can provide a service for a user at any time, and latency from time when the EAS is deployed to time when the EAS provides the service for the user is low.

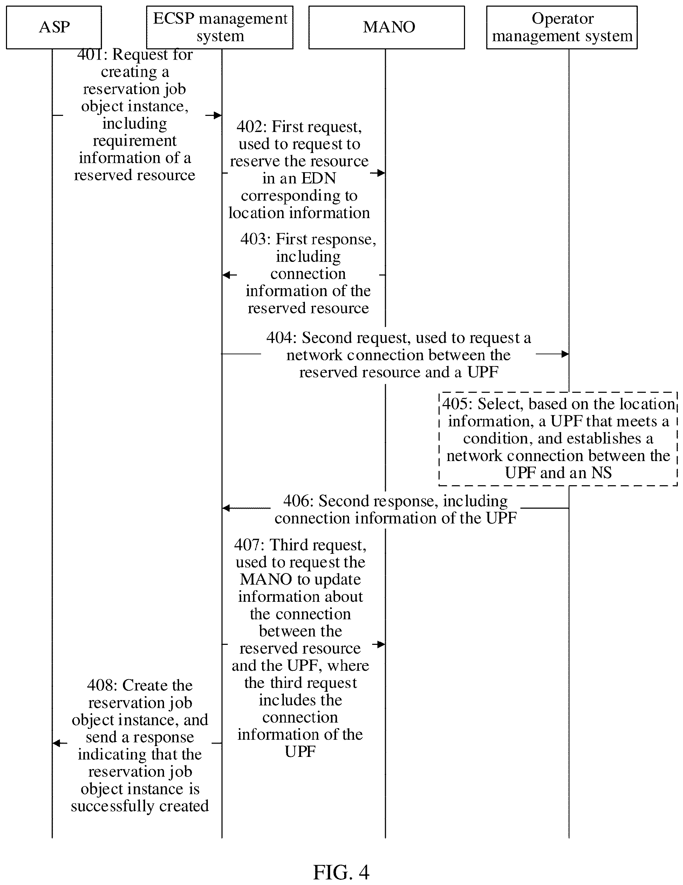

For Case 1, as shown in FIG. 4, a procedure is provided. The procedure includes:
Step 401: The ECSP management system receives the request for creating the reservation job object instance from the ASP, where the reservation job object instance includes the requirement information of the reserved resource.
Step 402: The ECSP management system sends the first request to the MANO based on the requirement information of the reserved resource, where the first request is used to request the MANO to reserve the resource in the EDN corresponding to the location information.

For example, the MANO may reserve the resource based on a virtualized network function (virtualized network function, VNF) by using a cloud computing technology. A network service virtualized through network functions virtualization (network functions virtualization, NFV) may be referred to as a network service (network service, NS). One NS may include at least one VNF. During virtualization deployment of an NS, a service requester (for example, the ECSP management system) needs to provide description information of the service for a service provider (for example, the MANO), and the description information may be referred to as a network service descriptor (network service descriptor, NSD), an NS deployment template, or the like. The description information mainly describes a topology structure of the service and description information of each VNF. Topology structure information describes a connection between VNFs. For example, a virtual link (virtual link, VL) or a virtual private cloud (virtual private cloud, VPC) may be used to describe the connection between the VNFs.

In a design, the ECSP management system determines the NSD based on the requirement information of the reserved resource. Each VM in the requirement information of the reserved resource is implemented by using one or more VNFs. In the following descriptions, an example in which each VM in the requirement information of the reserved resource is implemented by using one VNF is used for description. The NSD may include a topology structure and description information of each VNF. For example, the topology structure includes a quantity of VNFs and network connections of all the VNFs. That the requirement information of the reserved resource includes 10 VMs is still used as an example. In this case, the topology structure of the NSD may include 10 VNFs, network connections of the 10 VNFs, and the like. In an implementation, the 10 VNFs may be implemented in one network, and the network may be referred to as one VL, VPC, or the like. The network may be an internal virtual local area network or the like. In the virtual local area network, the 10 VNFs may communicate with each other, and the virtual local area network may be isolated from another network, or the like. The description information of each VNF includes a performance parameter of each VNF, and the performance parameter includes at least one of the following: a CPU, storage space, a network bandwidth requirement, or the like of the VNF. The ECSP management system may send a request for instantiating the NS to the MANO. Further, the request for instantiating the NS further includes location information and NSD information. Alternatively, the request for instantiating the NS includes NSD information (used to obtain information about an NSD file). In addition to the foregoing topology structure and description information of each VNF, the NSD may further include location information. The MANO selects a corresponding EDN based on the location information and instantiates the NS in the corresponding EDN. For example, one VL or VPC is created in the corresponding EDN, the VL or the VPC includes 10 VNFs, and CPUs, storage space, network bandwidth, and the like of the 10 VNFs all meet requirements. The MANO returns an NS instance creation response to the ECSP management system. In other words, a specific implementation of the first request is the request for instantiating the NS. A specific implementation of the first response is the NS instance creation response.

Step 403: The MANO sends the first response to the ECSP management system, where the first response indicates that the resource is successfully reserved, and the first response may include the connection information of the reserved resource.

The first response may be the NS instance creation response. When an NS instance is successfully created, the ECSP management system may query information about the created NS instance from the MANO, and the MANO returns the information about the NS instance to the ECSP management system based on a query request, where the information about the NS instance includes the connection information of the reserved resource, the connection information of the reserved resource may be access address information of the NS, for example, a service access point (service access point, SAP) of the NS, and the SAP may be egress gateway information of the VPC or the like.

Step 404: The ECSP management system sends the second request to the operator management system, where the second request is used to request the network connection between the reserved resource and the UPF.

For example, the second request is a request for creating an edge computing management connection information (edge computing management, EcmconnectionInfo) object instance, the second request includes an EcmconnectionInfo object, and the object includes the access address information of the NS corresponding to the reserved resource. In addition, the second request further includes the location information. In an implementation, the operator management system performs step 405: finding a UPF that meets a condition, establishing a network connection between the UPF and the NS, and creating the EcmconnectionInfo object instance, and performs step 406: sending a second response to the ECSP management system, where the second response may be a response indicating that the EcmconnectionInfo object instance is successfully created.

Optionally, in step 405, the operator management system selects, based on the location information, the UPF that meets the condition, and establishes the network connection between the UPF and the NS.

For example, each UPF has a specific service area, and a UPF whose service area includes a location corresponding to the location information may be used as a UPF that meets the condition. Alternatively, a UPF closest to a location corresponding to the location information may be used as a UPF that meets the condition. In a design, the operator management system may send the received access address information of the NS to an SMF that manages the UPF, the SMF may send the access address information of the NS to the UPF, and the UPF establishes the network connection to the NS. Optionally, the UPF side may store the access address information of the NS. For example, the access address information of the NS is configured in a route of the UPF. After the UPF completes the network connection to the NS, the operator management system may return connection information of the UPF to the ECSP management system via the second response, where the connection information may be an IP address of the UPF or the like.

Step 406: The operator management system sends the second response to the ECSP management system, where the second response includes the connection information of the UPF.

Step 407: The ECSP management system sends a third request to the MANO, where the third request is used to request the MANO to update information about the connection between the reserved resource and the UPF, and the third request includes the connection information of the UPF.

In a previous operation, the MANO deploys only the NS in the EDN, and does not configure a specific route in external connection information (for example, the SAP), or it may be understood as that a route in the external connection information of the NS is empty. Therefore, when obtaining the connection information of the UPF, the ECSP management system may send the third request to the MANO, where the third request includes the connection information of the UPF. The third request may be an update request, and the MANO may update the route in the external connection information of the NS from empty to the connection information of the UPF. Alternatively, the third request may be a configuration request, and the MANO may configure the connection information of the UPF in the route in the external connection information of the NS or the like.

Optionally, after step 407, the procedure may further include: The MANO sends a third response to the ECSP management system, where the third response is a response indicating that the information about the connection between the reserved resource and the UPF is successfully updated, or the like.

Step 408: The ECSP management system creates the reservation job object instance, and sends, to the ASP, a response indicating that the reservation job object instance is successfully created.

For example, the reservation job object instance created by the ECSP management system includes at least one of an identifier of a reservation job object, an address of a reserved resource corresponding to the reservation job object, or usage status information of the reserved resource. Optionally, when the resource is successfully reserved, the ECSP management system determines the usage status information of the reserved resource. For example, in Case 1, after the ECSP management system sends the third request, requesting to update the NS, and receives the third response indicating that the NS is successfully updated, it is considered that the resource is successfully reserved. The usage status information of the reserved resource includes at least one of the following: an identifier of the reserved resource, a usage status of the reserved resource, an identifier of an EAS deployed in the reserved resource, or usage of the reserved resource. Optionally, the identifier of the reserved resource includes an identifier of a VNF and an identifier of an NS to which the VNF belongs. The usage status of the reserved resource includes: the VNF is in an idle state, an occupied state, or the like. As shown in Table 1, the usage status of the reserved resource is specifically as follows.

**Table 1**

| Identifier of a reserved resource | Usage status of the reserved resource | Identifier of an EAS deployed in the reserved resource | Usage of the reserved resource |
|---|---|---|---|
| ID: VNF1 | Idle | | 0 |
| NS: NS-1 | | | |
| ID: VNF2 | Idle | | 0 |
| NS: NS-1 | | | |
| ID: VNF3 | Idle | | 0 |
| NS: NS-1 | | | |
| ... | ... | | ... |
| ID: VNF10 | Idle | | 0 |
| NS: NS-1 | | | |
| ID: VPC-1 | Idle | | 0 |
| NS: NS-1 | | | |

In Table 1, the reserved resource is implemented in the NS-1. The NS-1 may be an identifier of an NS corresponding to the reserved resource, an instance identifier of the NS corresponding to the resource, or the like. The identifier of the NS may be the same as or different from the instance identifier of the NS. This is not limited. In Table 1, the NS-1 includes 10 VNFs whose identifiers are respectively VNF1 to VNF10. An identifier of each VNF may be an identifier of the VNF or an instance identifier of the VNF. The identifier of the VNF may be the same as or different from the instance identifier of the VNF. It may be understood that Table 1 describes a usage status that is of the reserved resource and that is determined by the ECSP management system when the resource is successfully reserved. In this case, no reserved resource is occupied. Therefore, a usage status of each reserved resource is idle, usage of each reserved resource is 0, an identifier of an EAS deployed in each reserved resource is empty, or the like. It may be understood that, that the usage status of the reserved resource is idle means that a VNF corresponding to the reserved resource is successfully created, but no EAS application software is deployed or runs in the VNF. When EAS application software is deployed or runs on a VNF, it is considered that the VNF is occupied, and a usage status corresponding to the VNF is occupied. Optionally, as shown in Table 1, the usage status of the reserved resource may further include: a usage status of a VPC corresponding to an NS, an identifier of an EAS deployed in the VPC, usage of the VPC, and the like. In an example of Table 1, a VPC corresponding to VPC-1 includes 10 VNFs, the 10 VNFs form one VPC, and an identifier of the VPC is VPC-1. It may be understood that if any VNF in a VPC is occupied, it is considered that the VPC is occupied.

According to the foregoing design, at least one of the following information may be determined based on the usage status information of the reserved resource: which reserved resource being occupied, which reserved resource being idle, usage of the occupied reserved resource, an EAS deployed in the occupied reserved resource, or other information. Then, EAS deployment can be facilitated. For example, the EAS is preferentially deployed in an idle reserved resource, or the ESA is preferentially deployed in a reserved resource with low usage. Alternatively, when a reserved resource is to be deleted, a reserved resource that can be deleted may be determined based on usage information of the reserved resource, to avoid deleting the reserved resource for deploying the EAS. When the reserved resource that can be deleted is deleted, the reserved resource that is for deploying the EAS and that provides a service for the deployed EAS is not affected.

Case 2: The MANO is responsible for the network connection between the reserved resource and the UPF.

The ECSP management system sends a fourth request to an operator management system, where the fourth request is used to request connection information of the UPF corresponding to the location information. The operator management system sends a fourth response to the ECSP management system, where the fourth response includes the connection information of the UPF corresponding to the location information. The ECSP management system sends the first request to the MANO based on the requirement information of the reserved resource. In addition to reserving the resource in the EDN corresponding to the location information, the first request is further used to request the network connection between the UPF and the reserved resource, and the first request includes the connection information of the UPF, and the like.

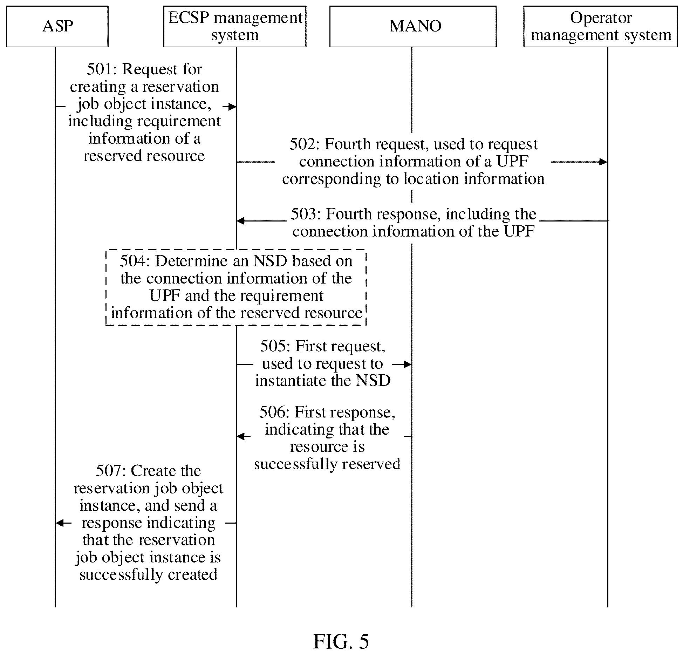

For Case 2, as shown in FIG. 5, a procedure is provided. The procedure includes:
Step 501: The ECSP management system receives the request for creating the reservation job object instance from the ASP, where the reservation job object instance includes the requirement information of the reserved resource.
Step 502: The ECSP management system sends the fourth request to the operator management system, where the fourth request is used to request the connection information of the UPF corresponding to the location information.

For example, the fourth request may include the location information of the reserved resource. The operator management system selects, based on the location information of the reserved resource, a UPF that meets a condition. For example, there may be a plurality of UPFs in an area, some UPFs are busy, some UPFs are idle, and an idle UPF is the UPF that meets the condition. Alternatively, there is one UPF in an area, and the UPF may be uniquely determined based on the location information of the reserved resource. In this case, the UPF is the UPF that meets the condition. Further, the fourth request further includes network requirement information, for example, a bandwidth requirement. The network requirement information may be determined based on bandwidth information in the requirement information of the reserved resource. For example, in the foregoing example, if a bandwidth requirement in the performance parameter of each VM in the requirement information of the reserved resource is 100 M, the network requirement information in the fourth request may be 100 M. Alternatively, if a quantity of VMs in the reserved resource is 10, and a bandwidth requirement of the 10 VMs is 1000 M, the network requirement information in the fourth request may be 1000 M or the like. The operator management system may determine, based on the network requirement information, a UPF that meets a condition. For example, one or more UPFs may be determined based on the location information of the reserved resource. A UPF that meets a condition or the like may be determined based on the network requirement information. For example, a UPF whose bandwidth is greater than or equal to that in the network requirement information may be selected from the one or more UPFs that meet the location information, and the UPF is used as the UPF that meets the condition. For example, a UPF whose bandwidth is greater than or equal to 100 M (or 1000 M) may be selected from the one or more UPFs that meet the location information as the UPF that meets the condition.

Step 503: The operator management system sends the fourth response to the ECSP management system, where the fourth response includes the connection information of the UPF that meets the condition. For example, the connection information of the UPF may be an IP address of the UPF.

Optionally, in step 504, the ECSP management system determines an NSD based on the connection information of the UPF and the requirement information of the reserved resource. The NSD includes a topology structure and description information of each VNF. For the topology structure and the description information of each VNF, refer to the descriptions in Case 1. In addition, the NSD may further include network requirement information of the connection between the reserved resource and the UPF, for example, specifically, network requirement information (for example, bandwidth) of a connection between a VL or a VPC of an NS corresponding to the reserved resource and the UPF. Further, the NSD further includes address information of the UPF.

Step 505: The ECSP management system sends the first request to the MANO, where the first request is a request for instantiating the NSD.

The MANO instantiates the NS based on the NSD. A process of instantiating the NS includes: reserving the resource in the EDN corresponding to the location information, and establishing the network connection between the reserved resource and the UPF. In a design, the process of instantiating the NS by the MANO includes: creating a VL or a VPC, where the VL or the VPC includes a VNF that needs to be reserved; further configuring a network of the VL or the VPC based on the network requirement information in the NSD, for example, configuring network bandwidth of the VL or the VPC; and establishing a network connection between the VL or the VPC and the UPF, configuring the address information of the UPF in a route of the VL or the VPC, and configuring the route of the VL or the VPC in a route of the UPF. It should be noted that the reserved resource corresponds to at least one NS, and the NS corresponds to one VL or VPC. Therefore, the network connection between the reserved resource and the UPF may be described as a network connection between the NS and the UPF, or described as the network connection between the VL or the VPC and the UPF, or the like. Address information of the reserved resource may be described as address information of the NS, address information of the VL or the VPC, or the like.

Step 506: The MANO sends a first response to the ECSP management system, where the first response indicates that the resource is successfully reserved.

For example, the first response may be a response for instantiating the NS.

Step 507: The ECSP management system creates the reservation job object instance, and sends, to the ASP, a response indicating that the reservation job object instance is successfully created.

For descriptions of the reservation job object instance, refer to the descriptions in Case 1. A difference is that the reservation job object instance includes a usage status of the reserved resource. The ECSP management system may determine the usage status of the reserved resource when the reserved resource is successfully reserved. In Case 2, when the ECSP management system receives the first response from the MANO, it may be considered that the reserved resource is successfully reserved, and the ECSP management system may determine the usage status of the reserved resource.

In Case 1 or Case 2, the ASP may query the usage status of the reserved resource from the ECSP management system based on an identifier of the reservation job object instance. Then, the ASP may deploy an EAS and the like based on the usage status of the reserved resource. For example, the ASP may deploy the EAS in a VNF in an idle state in the reserved resource, or may deploy the EAS in a VNF whose usage is less than a threshold.

According to the foregoing design, before deploying an EAS application, the ASP reserves a part of resources in the EDN by using the ECSP management system and the MANO, and the part of reserved resources is referred to as the reserved resource. Then, when the ASP sends a request for deploying the EAS to the ECSP management system, provided that within a quota of the reserved resource, the ECSP management system meets a requirement of the ASP for deploying the EAS application, so that a probability that the EAS fails to be deployed is reduced, and latency in accessing the EAS application by a user is reduced.

### [Embodiment 2]

In Embodiment 2, an EAS is deployed in the reserved resource in Embodiment 1. For example, an ECSP management system receives a fifth request from an ASP, where the fifth request is used to request to deploy the EAS in the reserved resource, and the fifth request includes an identifier of the reserved resource. According to the foregoing design, after the resource is successfully reserved, the ASP may deploy the EAS in the reserved resource, to resolve a problem during EAS deployment that latency in accessing the EAS by a user is high because the EAS is deployed in an EDN far away from the user due to the "first come, first served" mechanism and a limited resource for the EAS at a corresponding location.

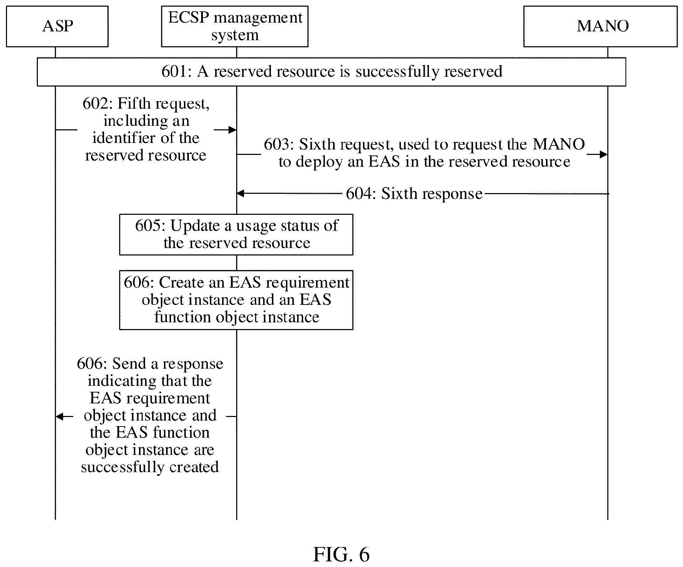

As shown in FIG. 6, a procedure is provided. The procedure may be used to deploy an EAS. For example, the procedure in FIG. 6 may be used to deploy the EAS in the reserved resource in Embodiment 1, and the procedure includes:
Step 601: The reserved resource is successfully reserved.

For example, an implementation in which the reserved resource is successfully reserved is: creation of a reservation job object instance is completed. For specific implementation of step 601, refer to the descriptions in Embodiment 1 above.

Step 602: The ECSP management system receives the fifth request from the ASP, where the fifth request includes the identifier of the reserved resource.

In a design, the identifier of the reserved resource may be an identifier of a reservation job object instance associated with a reservation job object. The ECSP management system may deploy the EAS of the ASP in the reserved resource corresponding to the reservation job object instance. In an implementation, the ASP may query a usage status of the reserved resource by using the ECSP management system, and the ASP determines to deploy the EAS in one or more VNFs. In this case, the ASP needs to notify the ECSP management system of an identifier of the one or more VNFs. For example, the fifth request further includes the identifier of the one or more VNFs in which the EAS is deployed. Alternatively, the ECSP management system determines to specifically deploy the EAS in one or more VNFs in an idle state in the reserved resource, or deploy the EAS in one or more VNFs whose usage is less than a threshold. For example, the ECSP management system queries the usage status of the reserved resource shown in Table 1, and determines, based on the usage status of the reserved resource, a VNF in which the EAS is deployed. It may be understood that one EAS may be deployed in one or more VNFs. This is not limited. In this case, the fifth request may no longer include the identifier of the one or more VNFs in which the EAS is deployed.

Step 603: The ECSP management system sends a sixth request to a MANO, where the sixth request is used to request the MANO to deploy the EAS in the reserved resource.

For example, when receiving the sixth request, the MANO may deploy the EAS in one or more VNFs that meet a condition and that are in the reserved resource. Deploying the EAS includes: loading an EAS application file in the one or more VNFs that meet the condition. Optionally, the EAS application file may also be referred to as an EAS image file. The EAS application file is preset, or the MANO obtains the EAS application file by using the ECSP management system. For example, the sixth request includes EAS application file information (for example, includes address information of the application file). The MANO can download the application file from a corresponding location based on the address information of the application file.

Further, the ECSP management system may obtain the EAS application file information by using the ASP. For example, the fifth request further includes the EAS application file information. The one or more VNFs that meet the condition, that is, the one or more VNFs in which the EAS is deployed, may be determined by the MANO, or may be determined by the ECSP and indicated to the MANO. For example, the sixth request includes the identifier of the one or more VNFs. Alternatively, the one or more VNFs may be determined by the ASP, indicated to the ECSP, and then indicated to the MANO by the ECSP. For example, both the fifth request and the sixth request include the identifier of the one or more VNFs or the like.

In an implementation, the ECSP management system may determine, based on the identifier that is of the reservation job object instance and that is sent by the ASP, an NS corresponding to the reserved resource, and obtain the usage status of the reserved resource. A VNF that meets a condition is selected based on the usage status of the reserved resource. For example, the VNF that meets the condition is a VNF whose usage status is idle, or a VNF whose usage is less than a threshold. Optionally, the VNF that meets the condition is a VNF in which the EAS is deployed. A specific implementation of the sixth request in step 602 is an update request. The sixth request is used to request the MANO to update the VNF that meets the condition, in other words, load EAS application software in a VM corresponding to the VNF that meets the condition. The sixth request includes an identifier of the VNF that meets the condition. Further, an identifier of an NS corresponding to the VNF that meets the condition is further included.

In an implementation, a specific implementation of step 602 and step 603 is as follows: The ASP generates an EAS requirement (requirement) object, and the ASP sends the fifth request to the ECSP management system, where the fifth request is a request for requesting to create an EAS requirement object instance, and the fifth request includes the EAS requirement object and the identifier of the reservation job object instance. The EAS requirement object includes requirement information required for deploying the EAS, for example, location information for deploying the EAS, or a virtual resource and an EAS application file required for deploying the EAS. The ECSP management system needs the EAS requirement object, to determine an EAS function (function) object. For example, the EAS requirement object includes a deployment requirement of one or more EASs, and the like. For example, if an EAS requirement object is a game-related requirement object, the EAS requirement object includes a requirement of deploying a location service-related EAS, a requirement of deploying a recharge service-related EAS, and the like. The ECSP management system determines at least one EAS function object based on the EAS requirement object, where each EAS function object includes a deployment requirement of one EAS. For each EAS function object, the ECSP management system selects, from the reserved resource based on the usage status of the reserved resource, a VNF that meets the condition, and sends, to the MANO, a sixth request for deploying an EAS in the VNF that meets the condition. For example, the sixth request may be an update request, and the update request is used to request to load the EAS application file in the VNF that meets the condition.

Step 604: The MANO sends a sixth response to the ECSP management system, where the sixth response indicates that the EAS is successfully deployed in the reserved resource.

As described above, the sixth request may be the update request, and the sixth request is used to request the MANO to update the VNF that meets the condition, in other words, deploy the EAS in the VNF that meets the condition. The sixth response may be a response indicating that an NS instance is successfully updated.

Step 605: The ECSP management system updates the usage status of the reserved resource.

For example, the ECSP management system updates information such as the VNF in the usage status of the reserved resource shown in Table 1. For example, as shown in Table 2, an identifier of a VNF in which the EAS is deployed is VNF1, and the EAS occupies all resources of the VNF. In this case, usage of the reserved resource of VNF1 is updated to 100%, a usage status of the reserved resource of VNF1 is updated to occupied, and an identifier of the EAS deployed in the reserved resource of VNF1 is updated to the identifier of the deployed EAS. In Table 2, that the identifier of the deployed EAS is EAS-1 is used as an example. Further, information about a VPC (that is, VPC-1) to which VNF1 belongs is updated. For example, a usage status of a reserved resource of VPC-1 is updated to occupied, and an identifier of an EAS deployed in the reserved resource of VPC-1 is updated to EAS-1. Because VPC-1 includes 10 VNFs, and only VNF-1 is occupied, usage of the reserved resource of VPC-1 is 10%.

**Table 2**

| **Identifier of a reserved resource** | **Usage status of the reserved resource** | **Identifier of an EAS deployed in the reserved resource** | **Usage of the reserved resource** |
|---|---|---|---|
| ID: VNF1 | **Occupied** | **EAS-1** | **100%** |
| NS: NS-1 | | | |
| ID: VNF2 | Idle | | 0 |
| NS: NS-1 | | | |
| ID: VNF3 | Idle | | 0 |
| NS: NS-1 | | | |
| ... | ... | | ... |
| ID: VNF10 | Idle | | 0 |
| NS: NS-1 | | | |
| ID: VPC-1 | **Occupied** | **EAS-1** | **10%** |
| NS: NS-1 | | | |

Optionally, after step 605, the procedure further includes: The ECSP management system sends an update indication for the reservation job object instance to the ASP, and when receiving indication information, the ASP determines that the reserved resource corresponding to the reservation job object instance is updated. The ASP queries the usage status of the reserved resource by using the ECSP management system.

Step 606: The ECSP management system creates the EAS requirement object instance and an EAS function object instance, and sends a response indicating that the EAS requirement object instance and the EAS function object instance are successfully created to the ASP.

In this embodiment of this application, after the EAS is successfully deployed, the EAS may be moved. For example, some servers running the EAS need to be shut down due to maintenance or upgrade of an EDN. In this case, the EAS needs to be moved to another server. Alternatively, the EAS may need to be moved to another server because resources in an EDN are insufficient. For the ASP, a movement policy may be configured during EAS deployment. For example, the fifth request may further include movement policy information of the EAS and the like, to ensure that a service provided by the EAS is not affected or is minimally affected.

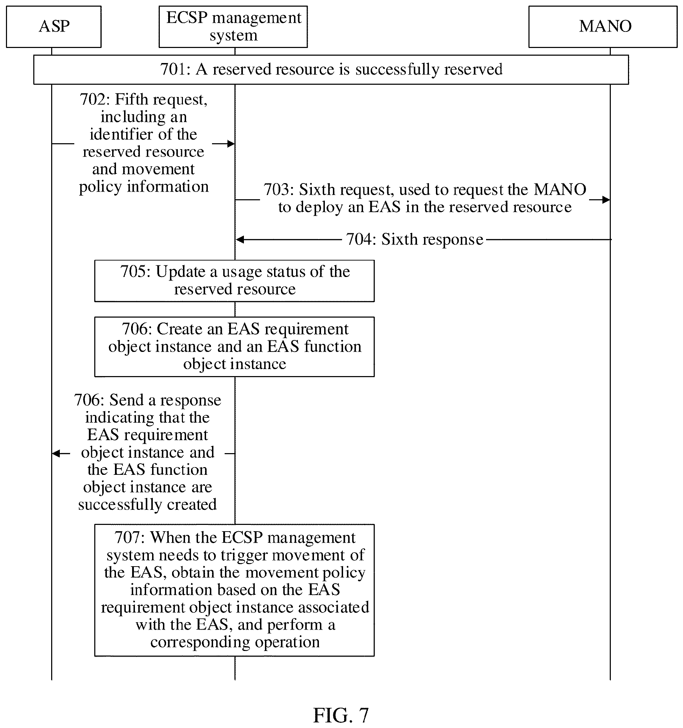

As shown in FIG. 7, a procedure is provided. A main difference between the procedure in FIG. 7 and the procedure in FIG. 6 is that when an EAS is deployed, a movement policy of the EAS may be configured, and then the deployed EAS may be moved according to the configured movement policy. The procedure includes:
Step 701: The reserved resource is successfully reserved.

In a design, an implementation in which the reserved resource is successfully reserved is: instantiation of a reservation job object is completed.

Step 702: The ECSP management system receives the fifth request from the ASP, where the fifth request further includes movement policy information in addition to the identifier of the reserved resource.

For example, the movement policy information includes at least one of the following: a movement condition, a movement scope, or the like. Optionally, the movement condition includes: movement allowed, movement not allowed, or whether the ASP needs to be queried before movement. The movement scope includes: moving the EAS in a same reserved resource, moving the EAS in different reserved resources in a same EDN, or moving the EAS in different EDNs.

In a design, the ASP may generate an EAS requirement object, where the EAS requirement object includes a movement policy, the movement policy may be referred to as a movement and notification (movement and notification) parameter, and a value of the parameter may be any one of the following:

### 1. Movement allowed: movement allowed.

A movement scope is: The EAS is allowed to be moved in a same reserved resource, the EAS is allowed to be moved in different reserved resources in a same EDN, the EAS is allowed to be moved in different EDNs, or the like.

### 2. Movement allowed with querying the ASP before the movement: movement allowed with notification.

A movement scope is the same as that for movement allowed.

### 3. Movement not allowed: no movement.

For example, when a condition is met, a successfully deployed EAS is not allowed to be moved. For example, the condition may be: If movement is performed across EDNs, the successfully deployed EAS is not allowed to be moved. Alternatively, no condition is defined. To be specific, after the EAS is successfully deployed, that the ECSP management system moves the EAS to another server is not recommended.

Step 703: The ECSP management system sends a sixth request to a MANO based on information about the identifier of the reserved resource, where the sixth request is used to request the MANO to deploy the EAS in the reserved resource.

For example, the ECSP management system may determine an EAS function object based on the EAS requirement object. Each to-be-deployed EAS in the EAS requirement object corresponds to one EAS function object. For each EAS function object, the ECSP management system may select, from the reserved resource, a VNF that meets a condition, and request the MANO to instantiate the VNF. Instantiating the VNF includes: deploying an EAS or the like in the VNF that meets the condition.

Step 704: The MANO sends a sixth response to the ECSP management system, where the sixth response includes an instantiation success response.

Step 705: Update a usage status of the reserved resource.

Step 706: The ECSP management system creates an EAS requirement object instance and an EAS function object instance, and sends a response indicating that the EAS requirement object instance and the EAS function object instance are successfully created to the ASP.

The EAS requirement object instance includes an identifier of the EAS requirement object instance, an identifier of a deployed EAS, an identifier of a VNF in which each EAS is deployed, an identifier of an NS to which the VNF belongs, address information of each EAS, and the like. One EAS corresponds to one EAS function object instance, or it is described as that one EAS function object instance corresponds to deployment of one EAS, or the like. The EAS function object instance includes an identifier of the EAS function object instance, an identifier of a deployed EAS, an identifier of a VNF in which the EAS is deployed, an identifier of an NS to which the VNF belongs, address information of each EAS, and the like.

Step 707: When the ECSP management system needs to trigger movement of the EAS, the ECSP management system obtains the movement policy information based on the EAS requirement object instance associated with the EAS, and performs a corresponding operation.

For example, when finding that the deployed EAS needs to be moved due to upgrade, resource shortage, or another reason in the EDN, the ECSP management system obtains the movement policy information based on the EAS requirement object instance associated with the EAS. Details are as follows.

If the movement policy information is movement allowed, and the movement scope is that movement is allowed in a same reserved resource, the ECSP management system requests the MANO to move the EAS in a same resource reserved by a reservation job object instance; or
if the movement policy information is that movement is allowed but the ASP needs to be queried before the movement, and the movement scope is movement across different EDNs, the ECSP management system may send a query message to the ASP, where the query message is used to query whether the ASP agrees to move the EAS. If the ASP agrees to move the EAS, the ECSP management system requests the MANO to move the EAS in different EDNs. In an implementation, in step 706, when the EAS function object instance is created, the EAS function object instance includes a movement action (movement action) parameter, and an initial value of the parameter is no movement (no movement). When the movement policy information is that movement is allowed but the ASP needs to be queried before the movement, the ECSP management system updates a movement action parameter in an EAS function object instance associated with an EAS that needs to be moved to movement required (movement required), and sends updated EAS function object instance information to the ASP. The ASP determines a running status of the EAS associated with the EAS function object instance, and determines whether to allow EAS movement. For example, when the running status of the associated EAS is a status that the EAS is currently providing a service for a user, the ASP may determine that the EAS movement is not allowed; otherwise, the ASP determines that the EAS movement is allowed. Further, if the ASP allows the EAS movement, the ASP updates the movement action parameter in the EAS function object instance to movement allowed (movement allowed), and the ECSP management system requests the MANO to perform a movement operation. Alternatively, if the ASP does not allow the EAS movement, the ASP updates the movement action parameter in the EAS function object instance to movement not allowed (movement not allowed), and the ECSP management system performs an operation of skipping movement temporarily.

According to the foregoing design, the ASP configures the movement policy when deploying the EAS. When the EAS needs to be moved to another server due to maintenance, upgrade, or the like of the EDN, the EAS may be moved according to the movement policy of the EAS, to ensure that the service provided by the EAS is not affected, is less affected, or the like.

### [Embodiment 3]

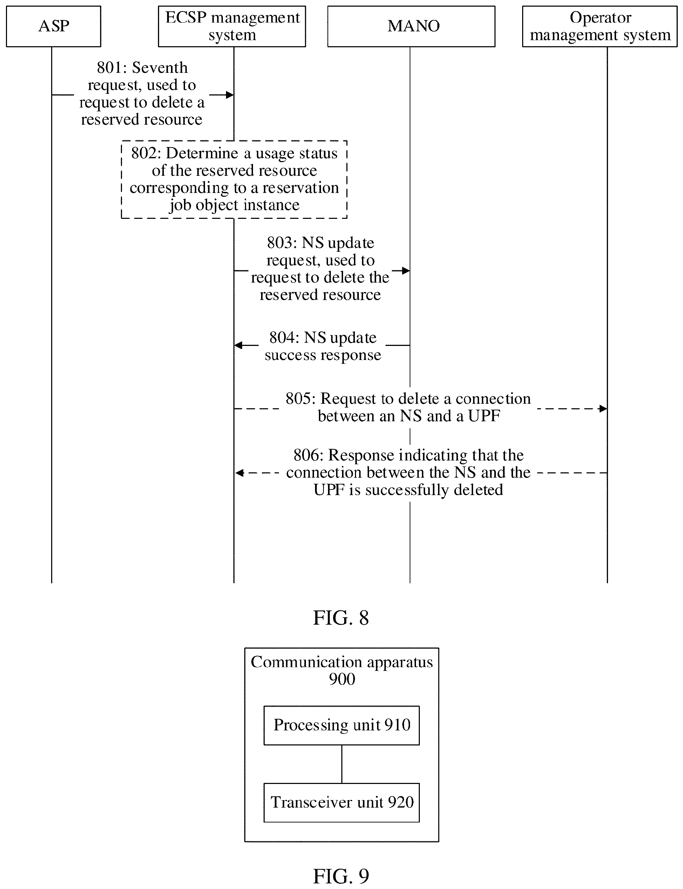

As shown in FIG. 8, an embodiment of this application further provides a procedure. The procedure may be used to delete a reserved resource. For example, the procedure may be used to delete the reserved resource in Embodiment 1, and the procedure includes:
Step 801: An ECSP management system receives a seventh request from an ASP, where the seventh request is used to request to delete the reserved resource. For example, the seventh request is used to request to delete a reservation job object instance, and the seventh request includes an identifier of the reservation job object instance.

Case 1: The ASP queries, based on the identifier of the reservation object instance, the ECSP management system for a usage status of the reserved resource, and deletes or moves, based on a requirement, all EASs deployed in the reserved resource. When all reserved resources are in an idle state, the ASP sends a request for deleting the reservation job object instance to the ECSP management system.

Case 2: The ASP directly sends a request for deleting the reservation job object instance to the ECSP management system, where the request may carry an indication for reserving an EAS deployed in the reserved resource.

Optionally, in step 802, the ECSP management system determines a usage status of the reserved resource corresponding to the reservation job object instance.

Step 803: The ECSP management system sends an NS update request to the MANO, where the NS update request is used to delete the reserved resource.

For Case 1, all the reserved resources are in the idle state, and the ECSP management system may directly delete the reservation job object instance. For Case 2, the ECSP management system requests the MANO to delete an unoccupied VNF from the reserved resource, and reserve an occupied VNF in the reserved resource. The occupied VNF is a VNF in which the EAS is deployed. For example, in the example in Table 2, the reserved resource includes 10 VNFs, and only VNF1 is occupied. In this case, only VNF1 may be reserved, and VNF2 to VNF10 may be deleted. Further, only a network resource of a VL or a VPC used by VNF1 is reserved, and network resources of other VNFs are deleted. For example, network bandwidth of 100 M is reserved for a VL or a VPC, but the EAS 1 deployed in VNF1 uses only 10% of the network bandwidth. In this case, only bandwidth of 10 M may be reserved, and remaining bandwidth of 90 M is released.

Step 804: The MANO sends an NS update success response to the ECSP management system.

Optionally, if all the reserved resources associated with the reservation job object instance are deleted, the procedure may further include:

Step 805: If a connection between an NS and a UPF is established by an operator management system, the ECSP management system requests the operator management system to delete the connection between the NS and the UPF, for example, delete an EcmConnectionInfo object instance.

Optionally, the EcmConnectionInfo object instance is created by the operator management system, and the object instance stores information about the connection between the NS and the UPF.

Step 806: The operator management system sends a response indicating that the connection between the NS and the UPF to the ECSP management system is successfully deleted, for example, sends a response indicating that the reservation job object instance is successfully deleted. Alternatively,
if the connection between the NS and the UPF is established by the MANO, when deleting all the reserved resources, the MANO may further delete the network connection between the NS and the UPF.

According to the foregoing design, when the resource is successfully reserved, if the ASP no longer uses the reserved resource, the reserved resource may be deleted, thereby avoiding a waste of the reserved resource.

It should be noted that, in embodiments of this application:
1. Differences between different embodiments are described in detail. For descriptions of different embodiments, reference may be made to each other.
2. In various embodiments, unless otherwise stated or there is a logic conflict, terms and/or descriptions in different embodiments are consistent and may be mutually referenced, and technical features in different embodiments may be combined based on an internal logical relationship thereof, to form a new embodiment.
3. Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.
4. In the procedures in FIG. 3 to FIG. 8, an execution sequence of different steps is not limited. For example, in FIG. 6, step 605 may be performed before step 606, or may be performed after step 605. Each procedure in FIG. 3 to FIG. 8 may include fewer or more steps than those in a schematic flowchart or text descriptions. This is not limited.

In the foregoing embodiments provided in this application, the method provided in embodiments of this application is described from a perspective of interaction between devices. To implement functions in the method provided in embodiments of this application, the ASP, the ECSP management system, the MANO, the operator management system, or the like may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

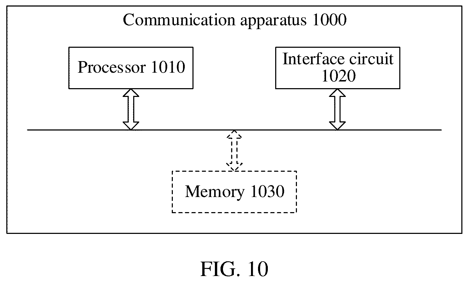

FIG. 9 and FIG. 10 are diagrams of structures of possible apparatuses according to embodiments of this application. These communication apparatuses may implement one or more corresponding functions in the foregoing method embodiments, for example, a function implemented by an ECSP management system, an ASP, or the like. Therefore, beneficial effects of the foregoing method embodiments may be implemented.

As shown in FIG. 9, a communication apparatus 900 includes a processing unit 910 and a transceiver unit 920. Optionally, the unit may also be referred to as a module. For example, the processing unit may also be referred to as a processing module, and the transceiver unit may also be referred to as a transceiver module.

For example, the processing unit may also be referred to as a processor, a processing board, a processing module, a processing apparatus, or the like. The communication unit may also be referred to as a transceiver, a transceiver machine, a transceiver module, a transceiver apparatus, or the like. Further, the communication unit may include at least one of a sending unit or a receiving unit. The sending unit and the receiving unit may be integrated together, or may be two independent units, or the like.

In a design, the communication apparatus 900 is configured to implement a function of the ECSP management system in FIG. 3 to FIG. 8. Specifically, the transceiver unit 920 is configured to receive requirement information of a reserved resource from an application service provider ASP, where the requirement information of the reserved resource includes location information of the reserved resource; and the processing unit 910 is configured to control, based on the requirement information of the reserved resource, the transceiver unit 920 to send a first request to a management and orchestration MANO, where the first request is used to request the MANO to reserve the resource in an edge data network EDN corresponding to the location information, there is a network connection between the reserved resource and a user plane function UPF corresponding to the location information, and the reserved resource is used to deploy an edge application server EAS of the ASP.

In another design, the communication apparatus 900 is configured to implement a function of the ASP in FIG. 3 to FIG. 8. Specifically, the processing unit 910 is configured to determine requirement information of a reserved resource, where the requirement information of the reserved resource includes at least location information of the reserved resource; and the transceiver unit 920 is configured to send the requirement information of the reserved resource to an edge computing service provider ECSP management system, where there is a network connection between the reserved resource and a user plane function UPF corresponding to the location information, and the reserved resource is used to deploy an edge application server EAS of the ASP.

For more detailed descriptions of the processing unit 910 and the transceiver unit 920, refer to the descriptions of FIG. 3 to FIG. 8 in the foregoing method embodiments. Details are not described herein again.

It may be understood that, in embodiments of this application, division into the units is an example, and is merely logical function division. During actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 10 is a diagram of another structure of a communication apparatus 1000 according to an embodiment of this application. For example, the communication apparatus 1000 shown in FIG. 10 may be an implementation of a hardware circuit of the communication apparatus 900 shown in FIG. 9. For ease of description, FIG. 10 shows only a main part of the communication apparatus.

As shown in FIG. 10, the communication apparatus 1000 includes a processor 1010 and an interface circuit 1020. The processor 1010 and the interface circuit 1020 are coupled to each other.

For example, the processor 1010 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like. The interface circuit 1020 may be a transceiver, an input/output circuit, or the like.

Optionally, the communication apparatus 1000 may further include a memory 1030, configured to: store instructions executed by the processor 1010, store input data needed by the processor 1010 to run instructions, or store data generated after the processor 1010 runs instructions. For example, the instruction may also be referred to as a computer program, computer program code, or the like.

For example, the memory 1030 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

When the communication apparatus 1000 is configured to implement the method shown in FIG. 3 to FIG. 8, the processor 1010 is configured to implement a function of the processing unit 910, and the interface circuit 1020 is configured to implement a function of the transceiver unit 920.

In an implementation, the interface circuit 1020 is configured to: receive a signal from a communication apparatus other than the communication apparatus 1000 and transmit the signal to the processor 1010, or send a signal from the processor 1010 to a communication apparatus other than the communication apparatus. The processor 1010 is configured to implement a function in FIG. 3 to FIG. 8 by using a logic circuit or by executing code instructions.

An embodiment of this application further provides a communication apparatus. The communication apparatus includes a processor and a memory. The processor is coupled to the memory, and the processor is configured to implement a function in FIG. 3 to FIG. 8. For example, the processor may execute instructions in the memory, so that the communication apparatus implements one or more functions in the foregoing method embodiments, for example, the function in FIG. 3 or FIG. 8. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in the ECSP management system, the ASP, or the like in FIG. 3 to FIG. 8. The processor and the storage medium may alternatively exist as discrete components in the ECSP management system, the ASP, or the like in FIG. 3 to FIG. 8.

An embodiment of this application further provides a computer-readable storage medium. The computer-readable storage medium stores instructions, and the instruction may also be referred to as a computer program, computer program code, or the like. The instructions are run on a computer, so that the computer performs a function in FIG. 3 to FIG. 8 in the foregoing method embodiments, for example, a function of the ECSP management system or the ASP in FIG. 3 to FIG. 8.

Optionally, the computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a computer program product. The computer program product includes a computer program or instructions. When the computer program or the instructions are run on a computer, the method in FIG. 3 to FIG. 8 is performed. For example, a function of the ECSP management system or the ASP in FIG. 3 to FIG. 8 is executed.

For example, the computer program product includes one or more computer programs or instructions. When the computer programs or the instructions are loaded and executed on a computer, the procedures or the functions in FIG. 3 to FIG. 8 in embodiments of this application are all or partially executed.

It may be understood that all or a part of the method in embodiments of this application may be implemented by using software, hardware, firmware, or any other combination. When the software is used to implement the method, the method may be implemented completely or partially in a form of the computer program product.

An embodiment of this application further provides a chip. The chip includes a processor, the processor is coupled to a memory, and the processor is configured to execute a computer program or instructions stored in the memory, so that the chip implements a function in FIG. 3 to FIG. 8, for example, implements a function of the ECSP management system or the ASP in FIG. 3 to FIG. 8. For example, the chip implements the function of the ECSP management system. The chip may receive information from another module (for example, a radio frequency or an antenna) in the ECSP management system, and the information may be sent by the ASP to the ECSP management system. Alternatively, the ECSP management system may send information to another module (for example, a radio frequency module or an antenna) in the ECSP management system, and the information is sent by the ECSP management system to the MANO, or the like.

An embodiment of this application further provides a communication system, including a first communication apparatus and a MANO. The first communication apparatus may implement a function of the ECSP management system in FIG. 3 to FIG. 8. For a specific structure of the first communication apparatus, refer to the foregoing descriptions, for example, the descriptions in FIG. 9 or FIG. 10. Optionally, the communication system further includes an operator management system. Further, the communication system further includes a second communication apparatus. The second communication apparatus may implement a function of the ASP in FIG. 3 to FIG. 8. For a specific structure of the second communication apparatus, refer to the foregoing descriptions, for example, the descriptions in FIG. 9 or FIG. 10.

It is clear that, a person skilled in the art can make various modifications and variations to this application without departing from the scope of this application. In this way, this application is intended to cover these modifications and variations of this application provided that they fall within the scope of protection of the claims of this application and their equivalent technologies.

## Claims

1. An edge application method, wherein the method is applied to an edge computing service provider ECSP management system, and comprises:
receiving requirement information of a reserved resource from an application service provider ASP, wherein the requirement information of the reserved resource comprises location information of the reserved resource; and
sending a first request to a management and orchestration MANO based on the requirement information of the reserved resource, wherein the first request is used to request the MANO to reserve the resource in an edge data network EDN corresponding to the location information, there is a network connection between the reserved resource and a user plane function UPF corresponding to the location information, and the reserved resource is used to deploy an edge application server EAS of the ASP.

2. The method according to claim 1, wherein the requirement information of the reserved resource further comprises at least one of the following: a quantity of reserved resources, a performance parameter of the reserved resource, or expiration time of the reserved resource.

3. The method according to claim 1 or 2, further comprising:
when the reserved resource is successfully reserved, determining usage status information of the reserved resource, wherein the usage status information of the reserved resource comprises at least one of the following: an identifier of the reserved resource, a usage status of the reserved resource, an identifier of the EAS deployed in the reserved resource, or usage of the reserved resource.

4. The method according to claim 3, wherein the identifier of the reserved resource comprises an identifier of a virtualized network function VNF and an identifier of a network service NS to which the VNF belongs; and the usage status of the reserved resource comprises: the VNF is in an idle state or an occupied state.

5. The method according to any one of claims 1 to 4, wherein after the sending a first request to a MANO based on the requirement information of the reserved resource, the method further comprises:
sending a second request to an operator management system, wherein the second request is used to request the operator management system to establish the network connection between the UPF and the reserved resource, and the second request comprises connection information of the reserved resource.

6. The method according to claim 5, wherein after the sending a second request to an operator management system, the method further comprises:
receiving a second response from the operator management system, wherein the second response comprises connection information of the UPF; and
sending a third request to the MANO, wherein the third request is used to request the MANO to update information about the connection between the reserved resource and the UPF, and the third request comprises the connection information of the UPF.

7. The method according to any one of claims 1 to 4, wherein before the sending a first request to a MANO based on the requirement information of the reserved resource, the method further comprises:
sending a fourth request to an operator management system, wherein the fourth request is used to request connection information of the UPF corresponding to the location information; and
receiving a fourth response from the operator management system, wherein the fourth response comprises the connection information of the UPF corresponding to the location information.

8. The method according to any one of claims 1 to 7, further comprising:
receiving a fifth request from the ASP, wherein the fifth request is used to request to deploy the EAS in the reserved resource, and the fifth request comprises the identifier of the reserved resource.

9. The method according to claim 8, wherein the fifth request further comprises movement policy information of the EAS, and the movement policy information comprises at least one of the following: a movement condition or a movement scope.

10. The method according to claim 9, wherein the movement condition comprises: movement allowed, movement not allowed, or whether the ASP needs to be queried before movement; and the movement scope comprises: moving the EAS in a same reserved resource, moving the EAS in different reserved resources in a same EDN, or moving the EAS in different EDNs.

11. An edge application method, wherein the method is applied to an application service provider ASP, and comprises:
determining requirement information of a reserved resource, wherein the requirement information of the reserved resource comprises at least location information of the reserved resource; and
sending the requirement information of the reserved resource to an edge computing service provider ECSP management system, wherein there is a network connection between the reserved resource and a user plane function UPF corresponding to the location information, and the reserved resource is used to deploy an edge application server EAS of the ASP.

12. The method according to claim 11, wherein the requirement information of the reserved resource further comprises at least one of the following: a quantity of reserved resources, a performance parameter of the reserved resource, or expiration time of the reserved resource.

13. The method according to claim 11 or 12, further comprising:
sending a fifth request to the ECSP management system, wherein the fifth request is used to request to deploy the EAS in the reserved resource, and the fifth request comprises an identifier of the reserved resource.

14. The method according to claim 13, wherein the fifth request further comprises movement policy information of the EAS, and the movement policy information comprises at least one of the following: a movement condition or a movement scope.

15. The method according to claim 14, wherein the movement condition comprises: movement allowed, movement not allowed, or whether the ASP needs to be queried before movement; and the movement scope comprises: moving the EAS in a same reserved resource, moving the EAS in different reserved resources in a same EDN, or moving the EAS in different EDNs.

16. An edge application method, comprising:
receiving, by an edge computing service provider ECSP management system, requirement information of a reserved resource from an application service provider ASP, and sending a first request to a management and orchestration MANO based on the requirement information of the reserved resource, wherein
the requirement information of the reserved resource comprises location information of the reserved resource, the first request is used to request the MANO to reserve the resource in an edge data network EDN corresponding to the location information, there is a network connection between the reserved resource and a user plane function UPF corresponding to the location information, and the reserved resource is used to deploy an edge application server EAS of the ASP; and
receiving, by the MANO, the first request from the ECSP management system.

17. The method according to claim 16, wherein the method further comprises:
reserving, by the MANO based on the first request, the resource in the EDN corresponding to the location information.

18. The method according to claim 16 or 17, further comprising:
sending, by the ASP, the requirement information of the reserved resource to the ECSP management system.

19. The method according to any one of claims 16 to 18, wherein the requirement information of the reserved resource further comprises at least one of the following: a quantity of reserved resources, a performance parameter of the reserved resource, or expiration time of the reserved resource.

20. The method according to any one of claims 16 to 19, further comprising:
when the reserved resource is successfully reserved, determining, by the ECSP management system, usage status information of the reserved resource, wherein the usage status information of the reserved resource comprises at least one of the following: an identifier of the reserved resource, a usage status of the reserved resource, an identifier of the EAS deployed in the reserved resource, or usage of the reserved resource.

21. The method according to claim 20, wherein the identifier of the reserved resource comprises an identifier of a virtualized network function VNF and an identifier of a network service NS to which the VNF belongs; and the usage status of the reserved resource comprises: the VNF is in an idle state or an occupied state.

22. The method according to any one of claims 16 to 21, wherein after the sending, by an ECSP management system, a first request to a MANO based on the requirement information of the reserved resource, the method further comprises:
sending, by the ECSP management system, a second request to an operator management system, wherein the second request is used to request the operator management system to establish the network connection between the UPF and the reserved resource, and the second request comprises connection information of the reserved resource; and
establishing, by the operator management system, the network connection between the UPF and the reserved resource based on the second request.

23. The method according to claim 22, further comprising:
sending, by the operator management system, a second response to the ECSP management system, wherein the second response comprises connection information of the UPF;
sending, by the ECSP management system, a third request to the MANO, wherein the third request is used to request the MANO to update information about the connection between the reserved resource and the UPF; and
updating, by the MANO, the information about the connection between the reserved resource and the UPF based on the connection information that is of the UPF and that is comprised in the third request.

24. The method according to any one of claims 16 to 21, wherein before the sending, by an ECSP management system, a first request to a MANO based on the requirement information of the reserved resource, the method further comprises:
sending, by the ECSP management system, a fourth request to an operator management system, wherein the fourth request is used to request connection information of the UPF corresponding to the location information; and
sending, by the operator management system, a fourth response to the ECSP management system, wherein the fourth response comprises the connection information of the UPF corresponding to the location information.

25. The method according to any one of claims 16 to 24, further comprising:
receiving, by the ECSP management system, a fifth request from the ASP, wherein the fifth request is used to request to deploy the EAS in the reserved resource, and the fifth request comprises the identifier of the reserved resource.

26. The method according to claim 25, further comprising:
sending, by the ASP, the fifth request to the ECSP management system.

27. The method according to claim 25 or 26, wherein the fifth request further comprises movement policy information of the EAS, and the movement policy information comprises at least one of the following: a movement condition or a movement scope.

28. The method according to claim 27, wherein the movement condition comprises: movement allowed, movement not allowed, or whether the ASP needs to be queried before movement; and the movement scope comprises: moving the EAS in a same reserved resource,
moving the EAS in different reserved resources in a same EDN, or moving the EAS in different EDNs.

29. A communication apparatus, comprising a unit configured to perform the method according to any one of claims 1 to 10.

30. A communication apparatus, comprising a processor and a memory, wherein the processor is configured to execute a computer program or instructions stored in the memory, to enable the communication apparatus to perform the method according to any one of claims 1 to 10.

31. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 by using a logic circuit or by executing code instructions.

32. A communication apparatus, comprising a unit configured to perform the method according to any one of claims 11 to 15.

33. A communication apparatus, comprising a processor and a memory, wherein the processor is configured to execute a computer program or instructions stored in the memory, to enable the communication apparatus to perform the method according to any one of claims 11 to 15.

34. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 11 to 15 by using a logic circuit or by executing code instructions.

35. A chip, comprising a processor, wherein the processor is coupled to a memory, and is configured to execute a computer program or instructions stored in the memory, to enable the chip to implement the method according to any one of claims 1 to 10 or the method according to any one of claims 11 to 15.

36. A computer-readable storage medium, storing a computer program or instructions, wherein when the computer program or the instructions are run on a computer, the computer is enabled to implement the method according to any one of claims 1 to 10 or the method according to any one of claims 11 to 15.

37. A computer program product, comprising a computer program or instructions, wherein when the computer program or the instructions are run by an apparatus, the method according to any one of claims 1 to 10 or the method according to any one of claims 11 to 15 is performed.

38. A communication system, comprising a first communication apparatus and a management and orchestration MANO, wherein the first communication apparatus is configured to implement the method according to any one of claims 1 to 10.

39. The system according to claim 38, further comprising an operator management system.

40. The system according to claim 38 or 39, further comprising a second communication apparatus, wherein the second communication apparatus is configured to implement the method according to any one of claims 11 to 15.
